# EUROPEAN PATENT SPECIFICATION

(11) **EP 1 869 880 B1**
(45) Date of publication and mention of the grant of the patent: **01.03.2017**
(21) Application number: 06739674.7
(22) Date of filing: 27.03.2006
(51) Int. Cl.: H04N 7/16

(54) **INTERACTIVE MOSAIC CHANNEL VIDEO STREAM WITH BARKER CHANNEL AND GUIDE**
INTERAKTIVER MOSAIKKANAL-VIDEOSTROM MIT BARKER-KANAL UND ANLEITUNG
FLUX DE DONNEES VIDEO DE CANAL MOSAIQUE INTERACTIF AVEC CANAL D'AUTOPUBLICTE ET GUIDE

(30) Priority: 28.03.2005 US 665896 P
(43) Date of publication of application: 26.12.2007
(73) Proprietor: The DIRECTV Group, Inc., El Segundo, California 90245 (US)
(72) Inventor: PURPURA, Richard F., Orange, California 92867 (US); SHANKS, David E., Los Angeles, CA 90077 (US); STANGER, Leon J., Farmington, UT 84025 (US); MUNSELL, Michael R., Playa del Rey, CA 90293 (US); DOYLE, Fergus, Santa Monica, CA 90401 (US); FELDSTEIN, David E., Santa Monica, CA 90403 (US); PATRICK, Carol A., Van Nuys, CA 90293 (US); JACOBS, Mitch C., Rancho Palos Verdes California 90275 (US); HOLTON, William C., El Segundo, CA 90245 (US); PETTYJOHN, Blair, El Segundo, CA 90245 (US); OSTROM, Carl, Nevada City, CA 95959 (US)
(74) Representative: Jackson, Richard Eric
(86) International application number: PCT/US2006/011019
(87) International publication number: WO 2006/104968

(56) References cited:
- US-A1- 2002 042 917
- US-A1- 2002 067 376
- US-A1- 2003 126 605
- US-B1- 6 536 041

## Description

### BACKGROUND OF THE INVENTION

### 1. Field of the Invention.

The present invention relates generally to satellite video systems, and in particular, to a method, apparatus, and article of manufacture for interactive mosaic channel video streams with barker channels and guides.

### 2. Description of the Related Art.

Satellite broadcasting of communications signals has become commonplace. Satellite distribution of commercial signals for use in television programming currently utilizes multiple feedhorns on a single Outdoor Unit (ODU) which supply signals to up to eight IRDs on separate cables from a multiswitch.

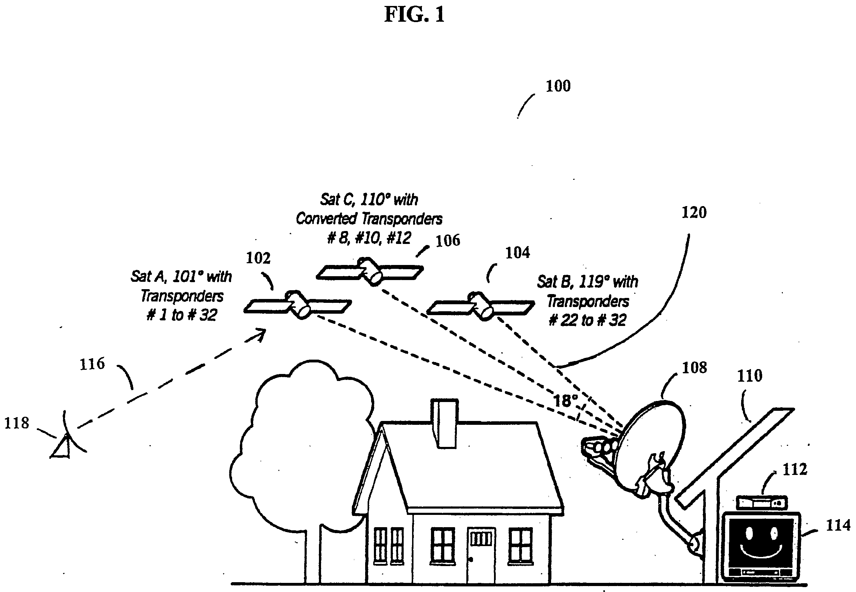

FIG. 1 illustrates a typical satellite television installation of the related art.

System 100 uses signals sent from Satellite A (SatA) 102, Satellite B (SatB) 104, and Satellite C (SatC) 106 that are directly broadcast to an Outdoor Unit (ODU) 108 that is typically attached to the outside of a house 110. ODU 108 receives these signals and sends the received signals to IRD 112, which decodes the signals and separates the signals into viewer channels, which are then passed to monitor 114 for viewing by a user. There can be more than one satellite transmitting from each orbital location.

Satellite uplink signals 116 are transmitted by one or more uplink facilities 118 to the satellites 102-104 that are typically in geosynchronous orbit. Satellites 102-106 amplify and rebroadcast the uplink signals 116, through transponders located on the satellite, as downlink signals 120. Depending on the satellite 102-106 antenna pattern, the downlink signals 120 are directed towards geographic areas for reception by the ODU 108.

Each satellite 102-106 broadcasts downlink signals 120 in typically thirty-two (32) different frequencies, which are licensed to various users for broadcasting of programming, which can be audio, video, or data signals, or any combination. These signals are typically located in the Ku-band of frequencies, i.e., 11-18 GHz. Future satellites will likely broadcast in the Ka-band of frequencies, i.e., 18-40 GHz, but typically 20-30 GHz.

As satellites 102-106 broadcast additional services and additional channels to viewers, viewers will like and expect to see programming on monitor 114 that relate to their specific needs and desires.
US 2003/126605 teaches a method for displaying EPG video clip previews on demand, in which the EPG grid guides have many formats.

### SUMMARY OF THE INVENTION

To minimize the limitations in the prior art, and to minimize other limitations that will become apparent upon reading and understanding the present specification, the present invention discloses an interactive mosaic channel video stream with a barker channel and guide. The present invention combines several "viewer channels" and an independent channel into a matrix channel that is not available as a separate viewer channel, into a single video stream, and combines that with an interactive capability along with a program guide for the video feeds that are used to make up the matrix channel. The matrix can be changed from a given number of matrix cells to a larger or smaller number of matrix cells during transmission. Further, the mosaic channel can include a streamer on screen to provide other information that may or may not be related to one or more of the cells of the matrix, as well as possibly being related to the barker channel. There can also be a close-captioning portion based on the selected portion of the screen, whether it is the barker channel or a selected cell of the matrix.

A video channel in accordance with the present invention comprises a plurality of video cells presenting at least video information, each video cell associated with one of the plurality of individual video feeds, a text box, a background video, and a cursor, which can be moved between the plurality of video cells, for selecting at least one characteristic associated with a selected video cell, such that the user can then directly select a video program associated with the selected video cell.

Such a video channel further optionally includes a barker cell that presents additional video and audio information that is also selectable by the cursor, the plurality of video cells being grouped by genre, a dynamic ticker, and the at least one characteristic associated with a selected video cell being the audio associated with that video cell.

Another embodiment of an interactive video channel displayed on a monitor in accordance with the present invention comprises a plurality of video cells presenting at least video information, each video cell associated with one of the plurality of individual video feeds, and a cursor, which can be moved between the plurality of video cells, for selecting at least one characteristic associated with a selected video cell.

Such an interactive video channel further optionally includes a barker cell that presents additional video and audio information, a text box displayed on the video monitor, the interactive video channel having a default setting, the default setting being an audio portion of the barker cell, the cursor changing the default setting, the cursor selecting one of the plurality of video cells as a selected cell, an audio portion of the selected cell being presented when the selected cell is selected, information in the text box changing when the selected cell is selected, a dynamic ticker, the information in the dynamic ticker changing when the selected cell is selected, and the dynamic ticker presenting information not related to the plurality of video cells.

Another embodiment in accordance with the present invention comprises a plurality of video cells presenting at least video information, each video cell associated with one of the plurality of individual video feeds, wherein the plurality of individual video feeds are grouped by genre, and a cursor, which can be moved between the plurality of video cells, for selecting at least one characteristic associated with a selected video cell.

Such an embodiment further optionally includes when the cursor selects one of the plurality of video cells as the selected video cell, the monitor presents an audio portion associated with the selected video cell, and when the cursor selects one of the plurality of video cells as the selected video cell, the selected video cell is individually selectable for viewing on the monitor.

Other features and advantages are inherent in the system disclosed or will become apparent to those skilled in the art from the following detailed description and its accompanying drawings.

### BRIEF DESCRIPTION OF THE DRAWINGS

Referring now to the drawings in which like reference numbers represent corresponding parts throughout:
FIG. 1 illustrates a typical satellite television installation of the related art;
FIG. 2 illustrates a typical six-cell matrix with a generic video feed in accordance with the present invention;
FIG. 3 illustrates a typical six-cell matrix without a generic video feed in accordance with the present invention;
FIG. 4 illustrates a typical five-cell matrix with a generic video feed in accordance with the present invention; and
FIGS. 5-8 illustrate typical on-monitor displays in accordance with the present invention.

### DETAILED DESCRIPTION OF THE PREFERRED EMBODIMENTS

In the following description, reference is made to the accompanying drawings which form a part hereof, and which is shown, by way of illustration, several embodiments of the present invention. It is understood that other embodiments may be utilized and structural changes may be made without departing from the scope of the present invention.

### Overview

The present invention is an interactive television channel that allows a viewer to view a video stream and select specific audio and/or video from the video stream based on a viewer's individual desires. The video stream is typically delivered to a user's monitor 114 via system 100, but could be done using cable or other terrestrial techniques.

When a viewer watches a specific program on a monitor 114, they are watching a "viewer channel" that comprises video and audio information that is routed to a specific "channel" to the monitor 114. For example, when a viewer wants to watch the local FOX affiliate station, they know that station is associated with a specific channel number on their monitor 114 or IRD 112, e.g., channel 11. When they program or otherwise indicate to the monitor 114 or IRD 112 to tune to channel 11, the monitor 114 or IRD 112 manipulates the electronics to capture and present the video information associated with that command from the satellite downlink 120, or from another source such as a coaxial cable input (cable TV) or terrestrial broadcast frequencies to present that information on monitor 114. The "viewer channel" information is typically the information that is presented when a viewer selects a given "channel" on the monitor 114 or IRD 112.

The present invention provides additional viewer channels that comprise multiple video feeds that would normally be presented to a viewer on separate viewer channels, as well as optionally presenting a unique video feed (called the "barker channel") that is not available on any other viewer channel as a stand-alone channel presentation. The present invention also allows a viewer to select various portions of the video and audio presentation based on commands sent by the viewer, typically via the remote control, to select the desired video and audio that is presented. This presentation is typically referred to as an "interactive channel," an "interactive matrix channel," or an "interactive mosaic channel" herein.

Within the interactive mosaic channel, the viewer is given several choices of other viewer channels to view, either simultaneously as in a matrix view, or the viewer can choose one of the matrixed viewer channels directly from the interactive mosaic channel.

There can be more than one interactive channel as described above, and, as such each of the interactive channels can have a thematic core, genre, or subject. For example, the interactive channels can comprise a group of related channels, such as a group of viewer channels that provide news programming, a second group of viewer channels that provide sports programming, a group of channels that provide children's programming, a group of channels that provide home shopping programming, or a group of channels that is selected by the user. Other groupings can be presented, such as all of the local network affiliate channels, specialty groups such as a group of channels that provide foreign-language specific programming, pay-per-view preview channels, adult programming, etc. The present invention is not limited based on the grouping of channels matrixed together to comprise the interactive mosaic channel.

The interactive mosaic channel can be reached in a similar fashion to the other viewer channels available for viewing on monitor 114; the interactive mosaic channel can be selected from the programming guide, the interactive mosaic channel number can be entered directly on the remote control, or the interactive mosaic channel would be found when the user is "channel surfing" or using the "next higher or lower channel" button on the remote control or directly on the monitor 114 or IRD 112.

### Interactive Mosaic Channel Display Diagram

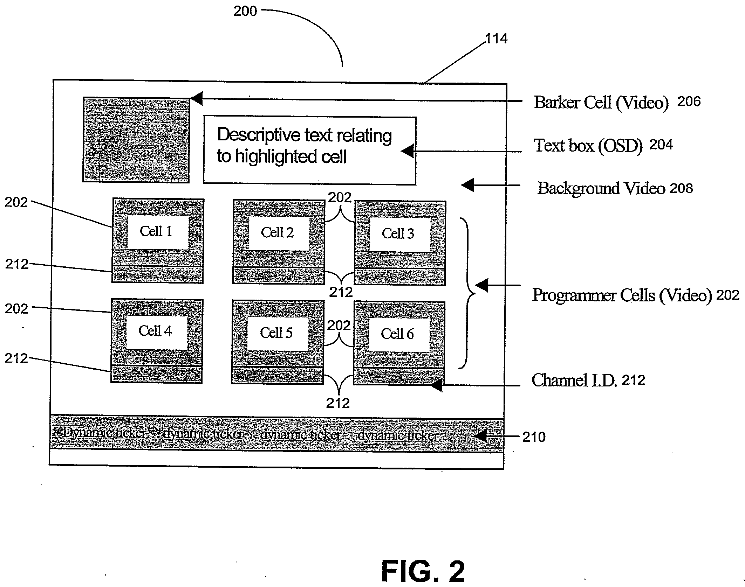

FIG. 2 illustrates a typical six-cell matrix with a generic video feed in accordance with the present invention.

Interactive mosaic channel 200 is shown as being displayed on monitor 114. Within interactive mosaic channel 200, there are a number of video cells 202 and a text box 204, also referred to as an On Screen Display (OSD) 204. Optionally, the interactive mosaic channel 200 further comprises a separate video cell 206, also called a "barker cell" 206, a background video 208, and a dynamic ticker 210.

The number of video cells 202 can change based on the number of video cells 202 desired. As the number of video cells 202 increases, of course, there must be a reduction in the size of the video cells 202 to ensure that the video cells are differentiated on the monitor 114. As the number of video cells 202 decreases, the size of the video cells 202 can increase, since there is more space available on monitor 114 to display video cells 202.

Further, the placement of video cells 202, barker cell 206, text box 204, and ticker 210 is not limited to the positions on monitor 114 as shown in FIG. 2. These elements can be displayed anywhere on monitor 114 without departing from the scope of the present invention.

As there are multiple video feeds and video cell 202 and barker cell 206 being presented, each video cell 202 and barker cell 206, as well as background video 208 and possibly dynamic ticker 210, have associated audio portions that can be played. Presenting more than one audio stream may be confusing; as such, it is typical that only one audio stream of information is presented at a given time. However, each of the video feeds may also have closed-captioning information associated with it, and selection of a closed-captioned presentation, rather than an audio presentation, can be performed as described herein.

### Video Cells

Video cells 202 each contain a separate viewer channel of programming. So for example, in an interactive mosaic channel that is focused on news programming, cell 1 could contain the video programming associated with the viewer channel of FOX News Channel, cell 2 could contain the video programming associated with the viewer channel of CNN, cell 3 could contain the video programming associated with the viewer channel of Headline News, cell 4 could contain the video programming associated with the viewer channel of MSNBC, cell 5 could contain the video programming associated with the viewer channel of The Weather Channel, and cell 6 could contain the video programming associated with the viewer channel of C-SPAN. The placement and video programming content for each video cell 202 can depend on a wide variety of factors, such as Nielsen ratings for a given channel, whether a given channel is available on a specific viewer's programming package, viewer channel number (lowest to highest or highest to lowest) or can be decided or changed based on programming that is present on one or more of the viewer channels available for the interactive mosaic channel. For example, and not by way of limitation, an important vote on the floor of the Senate may be taking place, and a decision can be made to change the placement of C-SPAN from video cell 202 cell 6 to video cell 202 cell 1 for a period of time. Changes in presentation for the interactive mosaic channel 200 are discussed below.

Within each of the video cells 202 is a channel identification (ID) box 212. Typically, the channel ID box 212 indicates to the viewer the moniker or name that is associated with the video feed being shown in that respective video cell 202, and the viewer channel number associated with the video feed being shown in that respective video cell 202. For example and not by way of limitation, in video cell 202 cell 1, which as described above, is showing the video feed for FOX News Channel, channel ID box 212 would indicate "FNC" or "FOX News" as well as a channel number, e.g., "360" to indicate to the viewer that the video feed being shown in video cell 202 cell 1 is that of FOX News Channel, and that the viewer is accustomed to seeing this full-monitor 114 video programming on viewer channel 360.

Other information may also appear in channel ID box 212, such as an indication that the video feed that is being presented in the associated video cell 202 is a "user favorite" channel, the channel ID box 212 may be presented in a different color or video texture to indicate that the video feed that is being presented in the associated video cell 202 is a channel that presents programming that adults may wish to block from their children's view or has closed-captioning available, etc. Many possibilities are available within the scope of the present invention to present various types of video information within channel ID box 212 for viewer selection and benefit. The channel ID box 212 may also appear without a video cell 202 for those video feeds that are channel blocked via parental control, or otherwise unavailable to a specific viewer because of the viewer's programming package or other reasons.

### Text Box

Text box 204 contains textual information that is useful to the viewer, and this information can change depending on the viewer's selection of interactive services as described herein. For example, the text box 204 can contain a generic statement about the genre of the interactive mosaic channel 200, or statements directed to a selected video cell 202 or information related to the channel ID box 212 to describe to a user the meaning of the information presented in the channel ID box 212 or other information related to the video cell 202 and channel ID box 212. The text box can also scroll to present additional information to the viewer that does not all fit within text box 204 at a given time.

There can also be default text associated with each interactive mosaic channel 200, and, depending on the capabilities of IRD 112, each time an interactive mosaic channel 200 is tuned to, a default descriptive text shall be displayed in the text box 204.

### Barker Cell

Barker cell 206 is a presentation of video data that can relate to the video cells 202 that are present in interactive mosaic channel 200. For those interactive mosaic channels 200 that have the optional barker cell 206, the barker cell 206 can use audio or video clues to direct the user to one of the video cells 202 for more information on a given topic, or provide an overview of the information presented within the video cells 202. For example, the audio and video associated with barker cell 206 in a news format can be a series of stories that are being covered in more depth on the viewer channels being shown in video cells 202, and the barker cell 206 audio and video can then direct the viewer to tune the IRD 112 or monitor 114 to a specific video cell 202 for more information on that topic. The barker cell 206 can also be used to provide an overview of the news stories, either those presented in video cells 202 or other news stories of interest, without directing the viewer to one of the video presentations being discussed in the video feeds shown in video cells 202.

Barker cell 206 can present audio and video information that is not available on any other viewer channel that is accessible to IRD 112 or monitor 114, other than within the barker cell 206 of the interactive mosaic channel 200. When the barker cell 206 presents audio and video information that is not present on any other viewer channel accessible to IRD 112 or monitor 114, then the barker cell 206 does not have an associated channel ID box 212.

### Background Video

Background video 208 is typically a backdrop for the interactive mosaic channel 200. The background video 208 can be related to the genre of the interactive mosaic channel 200; for example, in a news environment, the background video 208 can be related to a top news story, the stock market exchange building, a prominent government building, etc. The background video 208 can be changed or can be a dynamic video depending on the desires of the editorial staff or viewer preferences. Further, the background video 208 can be a logo or other indicator of the source of the interactive mosaic channel 200, such as DIRECTV.

### Dynamic Ticker

The dynamic ticker 210 can be used to provide real-time updates to the genre of the interactive mosaic channel 200. For example, in a news environment, the dynamic ticker 210 can provide breaking news that may hit news wires prior to being discussed or presented in the video cells 202 or barker cell 206. The dynamic ticker 210 can also be used to present other information, such as sports scores, stock market data, or other information, that can be related to the genre or to other issues. The dynamic ticker 210 can also be updated with new information at a different rate than that of the video cells 202, because the source of information that is used to create dynamic ticker 210 comes from a different source than the information that is presented in video cells 202.

### Alternative Presentations of Interactive Mosaic Channel

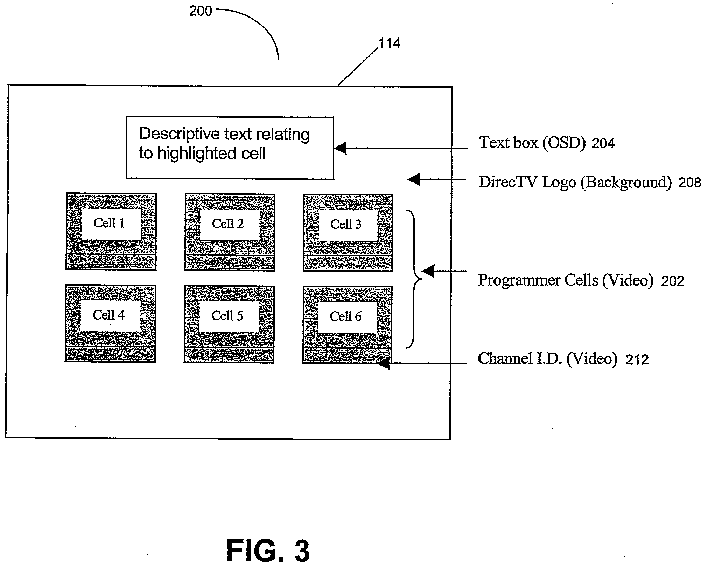

FIG. 3 illustrates a typical six-cell matrix without a generic video feed in accordance with the present invention.

Interactive mosaic channel 200 now does not comprise a barker channel 206 or a dynamic ticker 210. Text box 204 has been moved to a new location on monitor 114, and can be of a larger size if desired since it will no longer interfere with the presentation of barker cell 206 information. Further, video cells 202 can be larger in size because they will no longer interfere with the presentation of dynamic ticker 210.

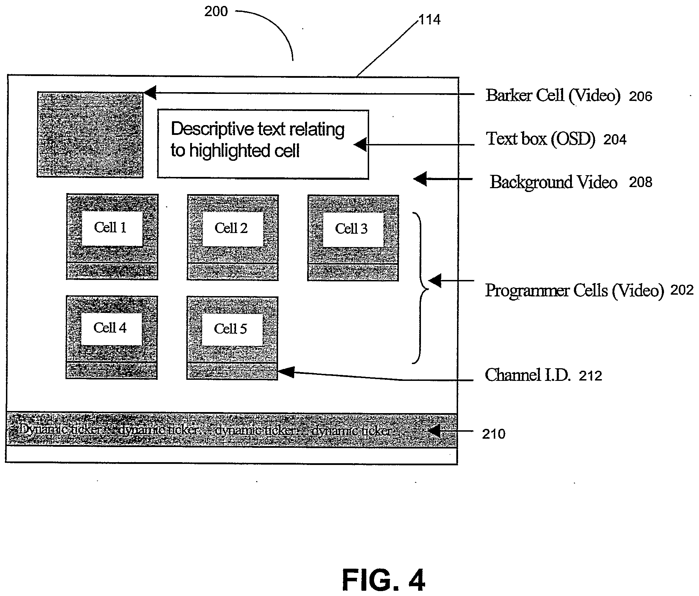

FIG. 4 illustrates a typical five-cell matrix with a generic video feed in accordance with the present invention.

As shown in FIG. 4, a different number of video cells 202, in this case, five video cells 202, can be presented within a given interactive mosaic channel 200. An interactive mosaic channel can present as few as two video cells 202, or as many video cells 202 that can be meaningfully presented within the confines of monitor 114. For monitors 114 that are in a 4:3 ratio (standard television monitors 114), typically, the number of video cells 202 that can be meaningfully presented is eight, with a barker cell 206 and a text box 204. However, if the text box 204 information is presented within the dynamic ticker 210, and the barker cell 206 is eliminated, then additional video cells 202 can be presented on a 4:3 ratio monitor 114. If the monitor 114 is a 16:9 (wide-screen) monitor 114, then it is possible to display additional video cells 202. Further, the video cells 202 can be presented in other formats than a row/column format as shown herein without departing from the scope of the present invention.

The determination of whether a given interactive mosaic channel 200 comprises a barker cell 206, a dynamic ticker 210, how many video cells 202 are presented, and the overall video content of the interactive mosaic channel 200 is based on a number of factors. The genre, Nielsen ratings, the accessibility of the channel for a given viewer or region, and directorial or editorial desires are some of the factors that play into that determination. Further, viewer preferences, surveys of viewers on the content or accessibility to specific interactive mosaic channels 200 or video feeds used to create video cells 202, also form a part of that decision. Typically, the presence or absence of a given viewer channel within an interactive mosaic channel 200, the presentation of a barker cell 206, text box 204 and text box 204 information, and the overall video and audio portions of interactive mosaic channel 200 is controlled by the service provider. However, it is also envisioned that there can be user-created and/or controlled interactive mosaic channels 200 for further enhancing the viewer's television experience.

### Interactive Features

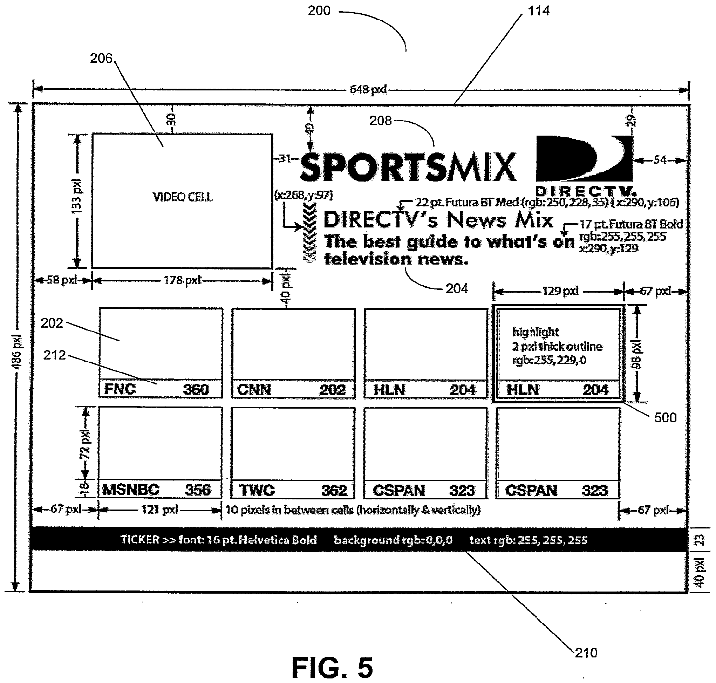

FIG. 5 illustrates a typical on-monitor display for an eight-cell mosaic in accordance with the present invention.

Interactive mosaic channel 200 is shown, with eight video cells 202. Each video cell 202 has an associated channel ID box 212, and one of the video cells 202 has a cursor 500 surrounding that specific video cell 202 and channel ID box 212. This indicates that the specific video cell 202 and channel ID 212 has been selected by the viewer.

By selecting a given video cell 202, the viewer is selecting a specific characteristic associated with that given video cell 202, or associated video feed used to generate that video cell 202. In most instances, when the viewer selects a given video cell 202, the audio portion associated with the selected video cell 202 will be presented to the viewer, rather than the audio portion associated with the barker cell 206 or a generic audio track that is associated with interactive mosaic channel 200. Further, selection of a given video cell 202 with cursor 500 may also select a closed captioning data stream associated with the selected video cell 202, depending on the Frecoravailability of such a data stream and/or other settings that a viewer has selected. Cursor 500 can be moved to any of the video cells 202, and, optionally, can be moved to select text box 204 or ticker 210.

When cursor 500 is moved to a given video cell 202, text box 204 also may undergo a change in information. Typically, when the video cell 202 is selected by the viewer, indicated by the presence of cursor 500, text box 204 will present the information in the Advanced Program Guide (APG) that is associated with the viewer channel selected by cursor 500. The APG typically includes information on the program or "show" that is currently being presented by the viewer channel shown in video cell 202, as well as the time that show is being aired and the next show to be aired on that viewer channel. Other information, either in the APG or external to the APG, can also be displayed in the text box 204 when the cursor is moved to a given video cell 202.

As such, the viewer can "interact" with the interactive mosaic channel 200 and decide which audio track to listen to, find out a plot line of each of the shows being presented in the various video cells 202, find out what is going to be aired next in the various viewer channels being presented in video cells 202, or listen to generic audio from the barker cell 206 or associated with the interactive mosaic channel 200 itself while variously viewing the video presentations in the video cells 202. If a specific video cell 202 presents video information that is of interest to a viewer, then the viewer can move cursor 500, via a remote control command, to a given video cell 202, and listen to the audio associated with that video cell 202 and find out more about that viewer channel in text box 204.

If the viewer decides that the selected video cell 202 is of enough interest, the viewer can then directly tune to the selected video cell 202, i.e., tune directly to that viewer channel that is providing the video and audio used to create video cell 202, by pressing a single button on the remote control (typically the "select" button on a DIRECTV remote control). This will tune the IRD 112 or monitor 114 to that viewer channel, which will then be presented full-screen to the viewer as in a normal television monitor 114 viewing format.

The barker cell 206, since it typically contains audio and video information that is not located on any viewer channel other than the interactive mosaic channel 200, cannot typically be selected for full screen viewing by the viewer on monitor 114. However, the barker cell 206 can be selected for full monitor 114 viewing, or at least enough of the monitor 114 to allow for changes in the video cells 202 as described below, to allow for changes in the interactive mosaic channel 200 in near-real-time.

As shown in FIG. 5, there can be multiple channels with similar names that are presented simultaneously in interactive mosaic channel 200. This allows for local channels or local network affiliates that are creating different video presentations to be presented simultaneously in a given interactive mosaic channel 200. For example, there can be an interactive mosaic channel 200 that presents FOX network shows in various time zones, and a viewer can choose to watch a video cell 202 that is from FOX in the eastern time zone (ET) rather than FOX on the west coast (Pacific Time Zone), regardless of where the viewer is geographically located.

When a viewer arrives at a given interactive mosaic channel 200, the position of cursor 500 may default to the barker cell 206, to a given video cell 202, to the text box 204, or default to not being present at all. The viewer may have to press a button on the remote control to activate the cursor 500. Typically, a viewer moves the cursor 500 by using the up/down/left/right keys on a remote control associated with the IRD 112, but other methods can be used without departing from the scope of the present invention. Further, if IRD 112 is not enabled for any or enough interactive services, the cursor 500 functions may be disabled, either entirely or partially, depending on the capabilities of IRD 112.

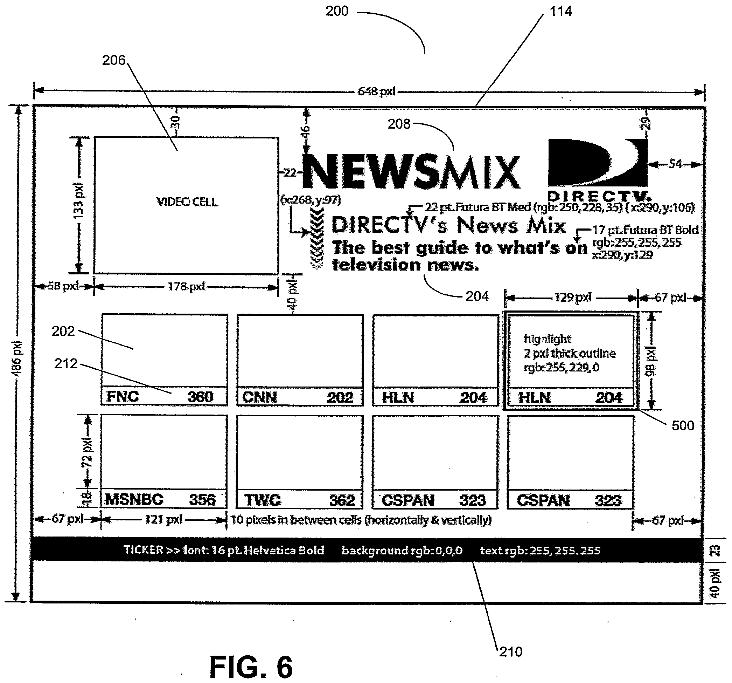

FIGS. 6-8 illustrate typical on-monitor displays in accordance with the present invention.

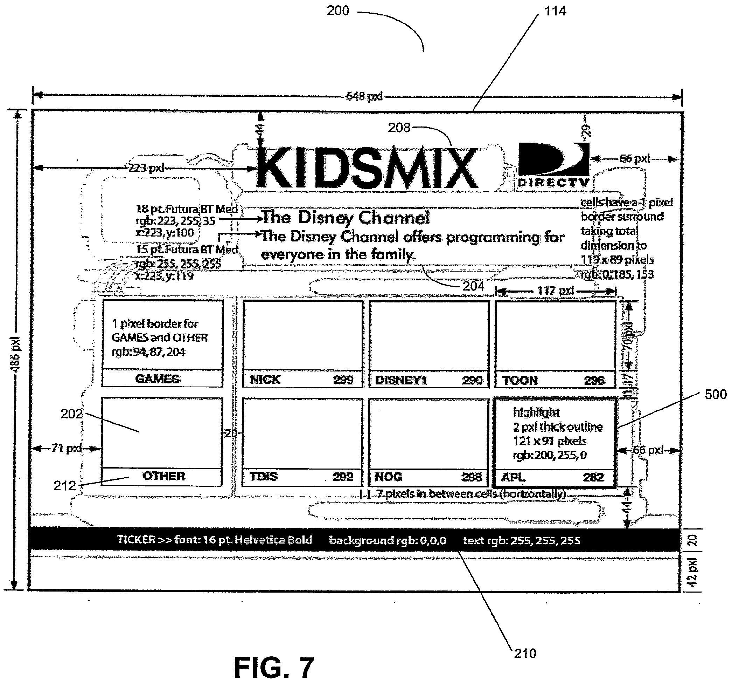

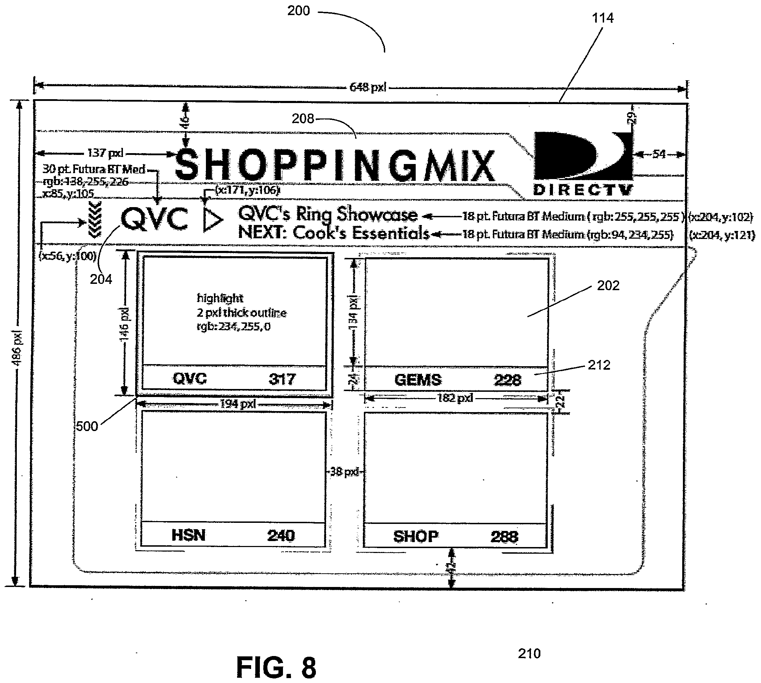

For other interactive mosaic channels 200, various different formats are available, based on genre or viewer preferences. FIG. 6 illustrates a change in background video 208 from FIG. 6, as well as indicating that some viewer channels may be applicable to more than one interactive mosaic channel 200. FIG. 7 illustrates that video programming other than that available on specific viewer channels can be presented within video cells 202; as such, the information in channel ID box 212, and the effects of cursor 500 when such a video cell 202 is selected, will be different than that with respect to video cells 202 that are associated with viewer channels. FIG. 8 illustrates an interactive mosaic channel with only four video cells 202, and also indicates in text box 204 a possible effect of placing cursor 500 on a given video cell 202; text box 204 provides the title of the show currently airing on the video cell 202 selected by cursor 500, as well as the next upcoming show that will be aired on that video cell 202.

There can also be the ability to record interactive mosaic channel 200 which will allow a viewer to record what would be several viewer channels as a single viewer channel, i.e., the recorded interactive mosaic channel 200. However, a recorded version of interactive mosaic channel 200 may act differently than a live-feed interactive mosaic channel 200, because the cursor 500 functions may no longer be consistent with a recorded version of that video information. For example, selection of a video cell 202, in a live-feed version, would tune the IRD 112 to the channel number associated with that video cell 202. When it is a recorded version, selection of that video cell would not tune the IRD 112 to the channel number, but would likely present that recorded video information in a full-monitor 114 format, with possible degradation of picture quality. The ability to record interactive mosaic channel 200 may also be selectively disabled if desired.

### Changes in Interactive Mosaic Channel Display

Some of the interactive mosaic channels 200 may, because of the genre selected for that interactive mosaic channel 200 or for other reasons, may need to have the video cells 202 changed from one viewer channel to another, or to have video cells 202 added or deleted from the presentation of the interactive mosaic channel 200 on monitor 114. As such, there must be a capability to change the presentation of any given interactive mosaic channel 200. The changes may be of a time-sensitive nature, such as changes in news or sporting events, or a seasonal change, such as additional viewer channels carrying an event such as the NCAA Basketball Tournament, and thus, would be seasonally included in an interactive mosaic channel 200 presentation, or of a programming nature, where a viewer adds or deletes a viewer channel to their programming package and thus access to such a viewer channel is selectively allowed or denied. If such a viewer channel is being used to create a given interactive mosaic channel 200, then the interactive mosaic channel 200 must have the capability of adding that video feed for presentation on the monitor.

For example, in a sports genre interactive mosaic channel 200, it is typically known when a sporting event will start and which viewer channel the event will be carried on. So, interactive mosaic channel 200 can schedule the change to the video feed for that viewer channel as being shown on a video cell 202, or change away from a viewer channel that is no longer carrying a sporting event, based on a schedule or other set time-frame events.

When such changes take place, for those interactive mosaic channels 200 that have barker cells 206 associated with them, the service provider (which can be DIRECTV, or some other service provider) can program the interactive mosaic channel 200 to take the barker cell 206 "full screen," which means that the barker cell 206 would be presented to the viewer in such a way that the video cells 202 are not visible. It may or may not be desirable to also present the barker cell 206 in such a way that the dynamic ticker 210 is not visible, or to present information on the dynamic ticker 210 that the viewer needs to wait during the change in programming. Further, barker cell 206 information can provide audio or video information to the viewer that a change in interactive mosaic channel 200 programming is taking place, and to ask the user to wait until the changes are completed.

Once the interactive mosaic channel 200 programming is completed, the service provider would then send the video information that shows the new configuration of video cells 202, new placement of barker cell 206, new text box 204 information, etc.

For example, FIG. 2 illustrates a six-cell interactive mosaic channel 200, and FIG. 4 illustrates a five-cell interactive mosaic channel 200. If this specific interactive mosaic channel 200 is being presented on channel 700 on a given IRD 112 or monitor 114, and the sixth video cell 202 from FIG. 1 were somehow inactivated, for whatever reason, the service provider could take the video information from the barker cell 206 and present that as the entirety, or at least the majority, of the video information on channel 700, and force channel 700 to carry the audio portion associated with the barker cell 206 video. The changes in the video cells 202, i.e., the removal or addition of video cell 202 cell 6 in the lower right hand corner of the monitor 114, could take place, any testing desired or necessary could also take place, and a transition could be made from the barker cell 206 video on the majority/entirety of the monitor 114 to the interactive mosaic channel 200 would occur.

Other methods of performing the change in video presentation of viewer channels are also possible within the scope of the present invention.

The service provider, and the viewer, have the ability to black out or disable viewer channels, and, as such, have the ability to black out or disable not only entire interactive mosaic channels 200, but the individual video feeds that are associated with video cells 202 that are presented within an interactive mosaic channel 200. Further, users may have the ability to create their own interactive mosaic channel 200, depending on the equipment capabilities of IRD 112, monitor 114, or other equipment that a specific viewer may have access to.

For example, a given viewer may have a programming package that does not provide access to a specific viewer channel, e.g., C-SPAN2. If the video feed that is used for viewer channel C-SPAN2 is used to create an interactive mosaic channel 200, there are several options as to how to display the interactive mosaic channel 200 without inadvertently giving a user access to the video information on the unauthorized viewer channel. For example, the interactive mosaic channel 200 may use a channel logo graphic to fill the video cell 202, and still provide the channel name/moniker and channel number in the channel ID box 212. The interactive mosaic channel 200 may use a generic video feed to inform the viewer that an upgrade is available to the viewer's programming package that would enable the viewer to see the video information on that channel, and assist the viewer in upgrading their service to receive that video and audio information. The service provider may also choose to present no video cell 202 at all, or a blank video cell without a channel ID box 212. When the viewer places cursor 500 on the video cell 202 that contains the blacked out video feed, many options are available, based on the approach used to present the video information.

Further, parental controls are applicable to each of the video cells 202 and to an entire interactive mosaic channel 200. For example, an interactive mosaic channel 200 may be created that contains movie channels, such as HBO, SHOWTIME, and CINEMAX. If a movie is being shown on one of the video cells 202 that exceeds the parental control limit set for a given IRD 112 or monitor 114, then the video cell 202 associated with that movie will be blocked from view on the interactive mosaic channel 200 until the parental control limit is raised or the programming on that viewer channel drops below the set parental control limit. As a separate example, there may be an interactive mosaic channel 200 that is only for adult viewing, such as a shopping channel that children are not allowed to view because of possible unwanted purchases. A parental control can be applied to the entire interactive mosaic channel 200, just as with other viewer channels accessible on an IRD 112 or monitor 114. Applicable video and/or audio messages can be inserted into the viewer channels or the interactive mosaic channels 200 that are blocked to inform the viewer that the channel 200 or video cell 206 is blocked.

### Conclusion

The present invention discloses an interactive mosaic video channel displayed on a video monitor, with a plurality of individual video feeds being presented at a given time.

A video channel in accordance with the present invention comprises a plurality of video cells presenting at least video information, each video cell associated with one of the plurality of individual video feeds, a text box, a background video, and a cursor, which can be moved between the plurality of video cells, for selecting at least one characteristic associated with a selected video cell, such that the user can then directly select a video program associated with the selected video cell.

Such a video channel further optionally includes a barker cell that presents additional video and audio information that is also selectable by the cursor, the plurality of video cells being grouped by genre, a dynamic ticker, and the at least one characteristic associated with a selected video cell being the audio associated with that video cell.

Another embodiment of an interactive video channel displayed on a monitor in accordance with the present invention comprises a plurality of video cells presenting at least video information, each video cell associated with one of the plurality of individual video feeds, and a cursor, which can be moved between the plurality of video cells, for selecting at least one characteristic associated with a selected video cell.

Such an interactive video channel further optionally includes a barker cell that presents additional video and audio information, a text box displayed on the video monitor, the interactive video channel having a default setting, the default setting being an audio portion of the barker cell, the cursor changing the default setting, the cursor selecting one of the plurality of video cells as a selected cell, an audio portion of the selected cell being presented when the selected cell is selected, information in the text box changing when the selected cell is selected, a dynamic ticker, the information in the dynamic ticker changing when the selected cell is selected, and the dynamic ticker presenting information not related to the plurality of video cells.

Another embodiment in accordance with the present invention comprises a plurality of video cells presenting at least video information, each video cell associated with one of the plurality of individual video feeds, wherein the plurality of individual video feeds are grouped by genre, and a cursor, which can be moved between the plurality of video cells, for selecting at least one characteristic associated with a selected video cell.

Such an embodiment further optionally includes when the cursor selects one of the plurality of video cells as the selected video cell, the monitor presents an audio portion associated with the selected video cell, and when the cursor selects one of the plurality of video cells as the selected video cell, the selected video cell is individually selectable for viewing on the monitor.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description but by the claims.

## Claims

1. An interactive system for presenting a matrixed video channel on a monitor, with a plurality of individual video feeds being presented on the monitor at a given time, each individual video feed comprising video programming of a separate viewer channel, comprising:
a plurality of video cells presenting at least video information being simultaneously broadcast on the associated viewer channel, each video cell associated with one of the plurality of individual video feeds, each individual video feed being associated with a viewer channel wherein multiple viewer channel video feeds are presented at a given time on the matrixed video channel, **characterized in that** the matrixed video channel comprises an interactive interface broadcast with the matrixed video channel as a single stream, the interactive interface comprising:
a text box, wherein the text box selectively receives information from a program guide, the program guide being distinct from the matrixed video channel;
a background video; and
a cursor, which can be moved between the plurality of video cells, for selecting at least one characteristic associated with a selected video cell, such that the user can then directly select a video program associated with the selected video cell.

2. The interactive system of claim 1, further comprising a barker tell that presents additional video and audio information that is also selectable by the cursor, wherein the barker cell comprises a video feed unique to the matrixed video channel.

3. The interactive system of claim 2, wherein the plurality of video cells are grouped by genre.

4. The interactive system of claim 3, further comprising a dynamic ticker.

5. The interactive system of claim 4, wherein the at least one characteristic associated with a selected video cell is the audio associated with that video cell.

## Patentansprüche

1. Interaktives System zum Darstellen eines matrixförmig angeordneten Videokanals auf einem Monitor, wobei zu einer gegebenen Zeit mehrere einzelne Video-Feeds auf dem Monitor darstellt werden, wobei jeder einzelne Video-Feed ein Videoprogramm eines separaten Betrachterkanals enthält, das Folgendes umfasst:
mehrere Videozellen, die wenigstens Videoinformationen darstellen, die gleichzeitig auf dem zugeordneten Betrachterkanal rundgesendet werden, wobei jede Videozelle einem der mehreren einzelnen Video-Feeds zugeordnet ist, wobei jeder einzelne Video-Feed einem Betrachterkanal zugeordnet ist, wobei zu einer gegebenen Zeit mehrere Betrachterkanal-Video-Feeds auf dem matrixförmig angeordneten Videokanal darstellt werden, **dadurch gekennzeichnet, dass** der matrixförmig angeordnete Videokanal eine interaktive Schnittstelle umfasst, die mit dem matrixförmig angeordneten Videokanal als eine einzelner Strom rundgesendet wird, wobei die interaktive Schnittstelle Folgendes umfasst:
eine Textbox, wobei die Textbox wahlweise Informationen von einem Programmführer empfängt, wobei der Programmführer von dem matrixförmig angeordneten Videokanal verschieden ist;
ein Hintergrundvideo; und
einen Cursor, der zwischen den mehreren Videozellen bewegt werden kann, um wenigstens eine Charakteristik, die einer ausgewählten Videozelle zugeordnet ist, auszuwählen, derart, dass der Anwender direkt ein Videoprogramm, das der ausgewählten Videozelle zugeordnet ist, auswählen kann.

2. Interaktives System nach Anspruch 1, das ferner eine Barker-Zelle umfasst, die zusätzliche Video- und Audioinformationen darstellt, die ebenfalls durch den Cursor auswählbar sind, wobei die Barker-Zelle einen Video-Feed enthält, der für den matrixförmig angeordneten Videokanal eindeutig ist.

3. Interaktives System nach Anspruch 2, wobei die mehreren Videozellen nach Genre gruppiert sind.

4. Interaktives System nach Anspruch 3, das ferner einen dynamischen Ticker umfasst.

5. Interaktives System nach Anspruch 4, wobei die wenigstens eine Charakteristik, die einer ausgewählten Videozelle zugeordnet ist, der Ton ist, der dieser Videozelle zugeordnet ist.

## Revendications

1. Système interactif destiné à présenter une chaîne vidéo matricielle sur un écran de contrôle, avec une pluralité d'entrées vidéo individuelles présentées sur l'écran de contrôle à un instant donné, chaque entrée vidéo individuelle comprenant une programmation vidéo d'une chaîne de téléspectateurs distincte, comprenant :
une pluralité de cellules vidéo présentant au moins des informations vidéo qui sont diffusées simultanément sur la chaîne de téléspectateurs associée, chaque cellule vidéo étant associée à une entrée de la pluralité d'entrées vidéo individuelles, chaque entrée vidéo individuelle étant associée à une chaîne de téléspectateurs, de multiples entrées vidéo de chaînes de téléspectateurs étant présentées à un instant donné sur la chaîne vidéo matricielle, **caractérisé en ce que** la chaîne vidéo matricielle comprend une interface interactive diffusée avec la chaîne vidéo matricielle en un seul flux, l'interface interactive comprenant :
une zone de texte, la zone de texte recevant sélectivement des informations en provenance d'un guide des programmes, le guide des programmes étant distinct de la chaîne vidéo matricielle ;
une vidéo de fond ; et
un curseur, qui peut être déplacé entre la pluralité de cellules vidéo, destiné à sélectionner au moins une caractéristique associée à une cellule vidéo sélectionnée, de telle sorte que l'utilisateur puisse ensuite sélectionner directement un programme vidéo associé à la cellule vidéo sélectionnée.

2. Système interactif de la revendication 1, comprenant en outre une cellule de promotion qui présente des informations vidéo et audio supplémentaires qui sont également sélectionnables par le curseur, la cellule de promotion comprenant un flux vidéo unique à la chaîne vidéo matricielle.

3. Système interactif de la revendication 2, dans lequel la pluralité de cellules vidéo est regroupée par genre.

4. Système interactif de la revendication 3, comprenant en outre un affichage dynamique.

5. Système interactif de la revendication 4, dans lequel l'au moins une caractéristique associée à une cellule vidéo sélectionnée est le son associé à cette cellule vidéo.
